(19) Europäisches Patentamt
European Patent Office
Office européen des brevets

(11) **EP 2 688 935 B1**

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(51) Int Cl.:
***C08G 65/00*** *(2006.01)*    ***C08J 3/00*** *(2006.01)*

(21) Anmeldenummer: **12714574.6**

(86) Internationale Anmeldenummer:
**PCT/EP2012/001378**

(22) Anmeldetag: **22.03.2012**

(87) Internationale Veröffentlichungsnummer:
**WO 2012/126638 (27.09.2012 Gazette 2012/39)**

(54) **NEUE GRADIENTENPOLYMERE UND VERFAHREN ZU IHRER HERSTELLUNG**

NOVEL GRADATED POLYMERS AND PROCESS FOR THE PREPARATION THEREOF

NOUVEAUX POLYMÈRES À GRADIENT ET PROCÉDÉ DE FABRICATION DESDITS POLYMÈRES À GRADIENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2011 DE 102011015304**

(43) Veröffentlichungstag der Anmeldung:
**29.01.2014 Patentblatt 2014/05**

(73) Patentinhaber: **GT Elektrotechnische Produkte GmbH**
**79761 Waldshut-Tiengen (DE)**

(72) Erfinder:
• **PAULMANN, Uwe**
  **79790 Küssaberg (DE)**
• **NABER, Bernhard W.**
  **01987 Schwarzheide (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
**EP-A1- 0 006 150    EP-A2- 0 275 010**
**DE-A1- 2 513 817**

**Beschreibung**

Diese Erfindung betrifft neue Polymere mit einem Gradienten bezüglich Dichte und/oder Härte innerhalb eines Formteils oder einer Schicht sowie Verfahren zu ihrer Herstellung durch ein stufenweises Polyadditionsverfahren.

Die Herstellung von Formteilen mit einer über den Querschnitt veränderlichen Dichte ist bekannt, z. B. in Form der sog. Integralschaumstoffe, bei denen eine feste Außenhaut einen schaumförmigen Kern umhüllt und diese Außenhaut eine wesentlich höhere Festigkeit, z. B. Zugfestigkeit, als der Schaumkern aufweist. Die Zahl der Patente auf diesem Gebiet ist sehr groß, einige Beispiele seien mit der DE 28 25 569, DE 196 43 056, der DD 141.759 oder der DE 10 2004 023 770 genannt. Bei diesen Formteilen handelt es sich um in einer geschlossenen, in der Regel auf eine Temperatur zwischen 40 und 70°C temperierten Form reagierende zwei Komponenten, von denen mindestens eine ein Treibmittel enthält, derart aufgeschäumte Massen, dass das Treibmittel in der Schicht an der Wandung des Werkzeugs weder verdampfen noch sich lösen kann und einen Querschnitt nach der Dichte in Form eines U ergibt. Spezielle Ausführungsformen verwenden Fasern, um mit deren Hilfe eine Verdichtung in der Randzone oder in bestimmten Schichten des Formteils zu erhalten, siehe z. B. USP 6,623,169 B2 oder US 2010 0022479 A1. Die Gradienten hinsichtlich Dichte und Elastizität werden dabei allein über den Schäumvorgang und die damit verbundene Dichteänderung über den Querschnitt bzw. über die Verteilung von Füllstoffen - hier Fasern - dargestellt. Das Prinzip, einen Gradienten der Eigenschaften über die Verteilung von Füllstoffen einzustellen, wird auch in weiteren Erfindungsbeschreibungen verwendet. Nach der Lehre der US 2010/0256272 A1 wird durch das Herstellungsverfahren - durch Verarbeitung in der Schmelze oder in Lösung - eine Migration von Nanoteilchen aus der Masse des Materials an die Oberfläche bewirkt. Dadurch wird eine asymmetrische Form von Nanokompositen erhalten, bei denen die Konzentration der Nanoteilchen auf der Oberfläche mehrfach höher ist als im Zentrum des Teils. Die derart durch Nanoteilchen angereicherten Oberflächen weisen wesentlich verbesserte Eigenschaften im Vergleich zu den abgemagerten Zonen im Zentrum des Formteils auf. In einer Variante dieses Prinzips werden zyklische Polysiloxane im Komposit erzeugt, siehe WO 2008/156891 A2 (entspricht der US 2010/0249 309 A1). In einer weiteren Anwendung dieses Prinzips werden transparente Spritzgusskörper mit fluoreszierenden Teilchen hergestellt, die eine bestimmte Verteilung nach dem Teilchendurchmesser über den Querschnitt aufweisen, siehe DE-OS 10 2006 051 309 A1. Dieses Prinzip wird in der US-OS 2007/0112122 A1 bzw. der US-PS 7,144,622 B1 auch auf unterschiedliche Polymere als Füllstoffe angewendet, wobei in diesem Falle fluorierte Polymere in thermoplastischen Kunststoffen in Form von Schichten mit einem Dichtegradienten beschrieben werden.

Nach der WO 01/35886 A1 werden Komposite mit absorbierenden Eigenschaften beschrieben, bei denen Zonen mit höherer Dichte und einer höheren Konzentration an superabsorbierenden polymeren Teilchen und Zonen mit geringerer Dichte und einer geringeren Konzentration an superabsorbierenden polymeren Teilchen ausgebildet werden. Dadurch wird in Richtung der y-Achse ein Profil in Bezug auf Dichte und den Gehalt an superabsorbierenden polymeren Teilchen erreicht.

Nach der Lehre der US-PS 6,692,679 B1 können vernetzte Formteile mit variabler Verteilung der Füllstoffe erhalten werden, indem ein pulverförmiges Polymermaterial mit ungesättigten Kohlenstoffbindungen zum Zwecke der Vernetzung bestrahlt und unter Anwendung einer erhöhten Temperatur und eines erhöhten Druckes in die Form gebracht wird. Die Vernetzung wird ausschließlich über die Bestrahlung des pulverförmigen Materials erreicht.

Bei Verwendung von mindestens zwei Polymeren können während des Spritzgieß- oder Blasformprozesses nach der Lehre der WO 2010/060641 A2 über dem Querschnitt der Wandung mehrere Zonen hergestellt werden, wobei jede Zone eine unterschiedliche Konzentration der Polymeren oder eine unterschiedliche Dichte wenigstens eines der Polymeren aufweist. Dieses Prinzip wird zur Herstellung von Preforms auf der Basis von PET angewendet, wobei der Gradient durch unterschiedliche Kristallinitätsgrade erzielt wird.

In der CN 001156518 C wird ein Verfahren zur Herstellung von polymeren Materialien mit Gradienten unter Verwendung elektrischer Prozesse beschrieben.

Nach der US 2009/0286629 A1 werden Golfbälle mit Härtegradienten über den Querschnitt des Formteils hergestellt. Die Golfbälle weisen einen Kern und eine Deckschicht auf. Die Deckschicht wird durch eine einfache Schicht aus dem Reaktionsprodukt eines konjugierten Diens mit einer Mehrzahl von funktionellen Endgruppen, einer Isocyanatkomponente und einem Härtergemisch aus Aminhärter und Hydroxylhärter oder Gemischen davon sowie einem organischen Peroxid als Härter/Vernetzer für die ungesättigten Bindungen gebildet, wobei die Härte der Schicht an einem Punkt im Inneren mindestens 10 % geringer ist als an einem äußeren Punkt der Schicht. Die Isocyanatkomponente besteht dabei vorzugsweise aus Isocyanatprepolymeren auf der Basis von konjugierten Dienen mit wenigstens zwei Hydroxyl- oder Aminoendgruppen mit einem Isocyanatgehalt zwischen 5 und 9 %. Durch Mischen dieser Isocyanatkomponente mit dem Härtergemisch, einer weiteren Isocyanatkomponente und einer Initiatorverbindung in einer Form bei einer ersten Formtemperatur wird der Kern erhalten. Die Deckschicht wird nach Zusammenfügen von zwei Hälften, die wie beschrieben hergestellt wurden, bei einer zweiten Formtemperatur innerhalb einer vorbestimmten Zeit durch Härten des Gemisches mit einem Härtegradienten hergestellt.

Wie die Erfindungen nach dem Stand der Technik zeigen, ist das Problem der Herstellung von Polymermaterialien oder Kompositen mit Gradienten von Eigenschaften derzeit ein drängendes, für das ganz unterschiedliche Lösungen erarbeitet wurden. Wie das Beispiel der US 2009/0286629 A1 zeigt, ist die Kombination von Zusammensetzung der zur Herstellung verwendeten Gemische und die darauf abgestimmte Verarbeitungstechnologie der Schlüssel zur Erzielung von Gradienten in einem Material.

Eine technische Lösung zur Herstellung von geformten Polymermaterialien mit Gradienten von Eigenschaften ist bisher nicht beschrieben worden: die Nutzung der Inkompatibilität von reagierenden Gemischen mit unterschiedlicher Vernetzungsdichte bzw. Segregationsverhalten. Um dieses Prinzip nutzen zu können im Sinne der Erzeugung von Gradienten an Eigenschaften über den Querschnitt eines aus Polymeren herzustellenden Formkörpers sind verschiedene, auf sehr unterschiedlichen Gebieten liegende Prämissen zu erkennen und zu beachten. Mit einer derartigen technischen Lösung würde ein einfaches, unkompliziert durchführbares Verfahren zur Verfügung stehen, mit dem auf vergleichsweise einfache Weise Formkörper mit Eigenschaftsgradienten hergestellt werden könnten.

Aufgabe der Erfindung ist es daher, Formkörper aus Polyadditionsprodukten mit Eigenschaftsgradienten über den Querschnitt eines Formkörpers sowie Verfahren zu ihrer Herstellung zur Verfügung zu stellen.

Erfindungsgemäß wird die Aufgabe mit Verfahren gemäß den Ansprüchen 1-9 zur Herstellung von Formkörpern, die Polyadditionsprodukte enthalten, durch Einbringen eines Gemisches von Reaktanden in eine Form und anschließender Durchführung der Polyaddition gelöst, wobei die Komponenten des Reaktionsgemisches

A1) ein oder mehrere Polyetherpolyole der Hydroxylfunktionalität 2,1 bis 3,9 mit Molmassen zwischen 2000 und 8000,

A2) ein oder mehrere Additionsprodukte aus Di- und/oder Polyaminen und Alkylenoxiden mit einer Hydroxylfunktionalität 3,0 bis 6,0 mit Molmassen zwischen 300 und 8000,

A3) ein oder mehrere Di- und/oder Polyamine mit vorzugsweise sekundären Aminogruppen,

A4) ein oder mehrere Katalysatoren ausgewählt aus der Gruppe der tertiären Amine oder der metallorganischen Verbindungen,

B) ein oder mehrere Di- und/oder Polyisocyanate einschließlich Prepolymere auf deren Basis zur Reaktion gebracht werden, wobei an der Wandung der Form eine Temperatur eingestellt wird, die mindestens 2 K oberhalb der Glasübergangstemperatur des entstehenden Polyurethans der Komponente A2 liegt.

Darüber hinaus wird die Aufgabe mit Formkörpern gemäß den Ansprüchen 10-13 aus Polyadditionsprodukten gelöst, die dadurch gekennzeichnet sind, dass sie nach den Ansprüchen 1 bis 9 herstellbar sind und

50 bis 90 % eines elastischen Netzwerkes mit einer Glasübergangstemperatur des Polyurethans der Komponente A1 zwischen -52 und -12°C, 3 bis 40 % eines starren Netzwerkes mit einer Glasübergangstemperatur des Polyurethans der Komponente A2 zwischen +20 und +120°C und

1 bis 20 % eines starren Polyharnstoff-Netzwerkes mit einer Glasübergangstemperatur des Polyharnstoffes der Komponente A3 zwischen +50 und +240°C aufweisen,

wobei die Glasübergangstemperaturen mittels DMA gemessen sind.

Überraschend wurde gefunden, dass die Kombination von drei isocyanatreaktiven Reaktionskomponenten mit jeweils sehr unterschiedlichen Verzweigungsgraden, durch Umsetzung mit den Di- oder Polyisocyanaten sehr unterschiedlichen Vernetzungsgraden der entstehenden Polyurethane bzw. Polyharnstoffe bei mit zunehmender Reaktion steigender Inkompatibilität und mit Glasübergangstemperaturen in einem großen Bereich bei der Herstellung auch sehr schneller Systeme, d. h. kurzer Reaktionszeiten, zu einer schnellen Segregation innerhalb des Gesamtpolymeren führt. Durch die Temperatur der Formwandung wird dieser Vorgang entweder beschleunigt, nicht beeinflusst oder verlangsamt. Es war ebenso überraschend, dass eine Abstimmung der Formwandtemperatur auf nur wenige Kelvin oberhalb der gemessenen oder berechneten Glasübergangstemperatur des nur aus der Komponente A1 bis A3 und dem vorgesehenen Di- und/oder Polyisocyanat hergestellten Polyurethans oder Polyharnstoffs die Segregation der Netzwerke stark im Sinne einer Gradientenbildung hinsichtlich der Vernetzungsdichte und damit der spezifischen Dichte des Materials und seiner Härte beeinflusst und diese Gradienten quasi herausbildet. Diese Segregation der vernetzenden Polymersysteme lässt sich weiter durch den Einsatz ganz bestimmter nanoskaliger Teilchen steigern, die gemeinsam mit den harten Phasen der Polymere in eine Raumrichtung gedrängt werden können. Solche nanoskaligen Teilchen sind z. B. Metalloxide bzw. Metalloxid-hydroxide wie Aluminiumoxidhydroxid (natürlich als Böhmit vorkommend), Metallmischoxide oder -oxid-hydroxide wie Indium-Zink-Mischoxid mit einer bestimmten Anzahl von Hydroxylgruppen oder oberflächenbehandelte Graphene. Diese nanoskaligen Teilchen werden in Mengen von 0,001 bis 2,5 Gew.-% bezogen auf die Komponenten A1 bis A3 zugegeben und liegen damit im Wesentlichen unterhalb der Perkolationsschwelle der Nanoteilchen hinsichtlich der Veränderung wesentlicher mechanischer und/oder elektrischer Eigenschaften.

Daraus ergibt sich die dargestellte Lösung, ein System zu verwenden, das einerseits auf unterschiedlichen Verzweigungsgraden der Ausgangsstoffe und zum anderen auf unterschiedlichen Strukturelementen in den Ausgangskomponenten sowie nach der Polymerreaktion basiert. Ein solches System wird z. B. durch unterschiedlich verzweigte Polyetheralkohole gebildet, bei denen die Startermoleküle aus verschiedenen Strukturelementen bestehen und die zusätzlich gelöst oder vermischt aminische Komponenten enthalten, deren Aminogruppen vorzugsweise sekundär sind und die folglich zu an beiden Stickstoffatomen der Harnstoffgruppe zu trisubstituierten Gruppen führen, die in der Regel mit den anderen Strukturelementen inkompatibel sind und somit zu einer schnellen Segregation der Struktureinheiten während der Polymerreaktion und in Folge zu einer Gradientenbildung innerhalb des Formteils führen.

Es ist weiterhin überraschend, dass eine Kombination aus entweder über eine Reaktionskomponente eingeführte oder durch Umsetzung gebildete agglomerationsfähige (und damit zur Segregation und Domänenbildung befähigte) Gruppe mit bestimmten nanoskaligen anorganischen Teilchen zu einer Verstärkung des Agglomerationseffekts und einer stärker ausgeprägten Phasenbildung führt, die wiederum in bestimmten Schichten des Materials konzentriert sind und dass sich die Ausbildung der Phasen in einer bestimmten Schicht durch die Temperatur des verwendeten Werkzeugs und/oder seines Innendrucks steuern und kontrollieren lässt.

Erfindungsgemäß geeignete Zusammensetzungen des Reaktionsgemisches weisen demzufolge Mengenbereiche mit folgenden Massen auf:

A1) 40 bis 90 Gew.-% eines oder mehrerer Polyetherpolyole der Hydroxylfunktionalität 2,1 bis 3,9 mit Molmassen zwischen 2000 und 8000,

A2) 5 bis 40 Gew.-% eines oder mehrerer Additionsprodukte aus Di- und/oder Polyaminen und Alkylenoxiden mit einer Hydroxylfunktionalität 3,0 bis 6,0 mit Molmassen zwischen 300 und 8000,

A3) 0,1 bis 20 Gew.-% eines oder mehrerer Di- und/oder Polyamine mit vorzugsweise sekundären Aminogruppen,

A4) 0,001 bis 5 Gew.-% eines oder mehrerer Katalysatoren ausgewählt aus der Gruppe der tertiären Amine oder der metallorganischen Verbindungen,

A5) bis zu 33 Gew.-% an Zusatzstoffen wie anorganischen Füllstoffen einschließlich nanoskaligen Partikeln, Pigmenten, Farbstoffen, Flammschutzmitteln, anorganischen Stoffen zur Steuerung der Wärme- oder elektrischen Leitfähigkeit und

B) einem oder mehreren Di- und/oder Polyisocyanaten einschließlich sogenannter Prepolymerer auf deren Basis in einer Menge, die 50 bis 200 % der zur stöchiometrischen Umsetzung erforderlichen Menge entspricht.

Die erfindungsgemäßen Formkörper mit Eigenschaftsgradienten über den Querschnitt eines Formkörpers bestehen demzufolge aus
50 bis 90 % eines elastischen Netzwerkes mit einer Glasübergangstemperatur zwischen -52 und -12°C,
3 bis 40 % eines starren Netzwerkes mit einer Glasübergangstemperatur zwischen +20 und +120°C und
1 bis 20 % eines starren Polyharnstoff- Netzwerkes mit einer Glasübergangstemperatur zwischen +50 und +240°C, wobei innerhalb des durch eine Polymerreaktion gebildeten Formkörpers eine Segregation im nanoskaligen und/oder Mikrobereich stattfindet und die starreren Strukturanteile aus dem Zentrum des Formkörpers in die Randzone(n) gedrängt werden, so dass über den Querschnitt des Formkörpers ein Gradient in Bezug auf Dichte bzw. Härte herausgebildet wird.

Da die erfindungsgemäßen Polymere oder Komposite kompakte Materialien sind, werden die Dichtegradienten im wesentlichen durch die unterschiedliche Vernetzungsdichte bestimmt. Lineare Polyetherurethane weisen in der Regel eine Dichte von ca. $1,17$ g/cm$^3$ auf, mit zunehmendem Vernetzungsgrad steigt die Dichte bis auf $1,27$ g/cm$^3$ bei hoch- vernetzten harten Materialien an. Auf Grund der Funktionalität der eingesetzten Komponenten wird die Dichte in den erfindungsgemäßen Materialien - bei Abwesenheit von Füllstoffen oder Additiven - einen Gradienten von ca. $1,185$ g/cm$^3$ bis höchsten $1,245$ g/cm$^3$ aufweisen.

Die Härte wird dagegen wesentlich durch die Menge der Harnstoffgruppen im Material und die Vernetzungsdichte bestimmt. Sie kann demzufolge zwischen Shore-00 30 für ausschließlich aus langkettigen Polyetheralkoholen und Diisocyanaten bestehende Netzwerke bis zu Shore D 55 für aus kurzkettigen Aminopolyetheralkoholen und aromatischen Diisocyanaten bestehende Netzwerke liegen. Bevorzugt werden Härtegradienten von über 10 Shore-A-Einheiten, bevorzugt solche mit Härtegradienten mit Shore-A-Einheiten zwischen 20 und 40.

Erfindungsgemäß werden die Formkörper mit Eigenschaftsgradienten über den Querschnitt eines Formteils dadurch hergestellt, dass

i) die Komponenten A1 bis A4 oder A1 bis A5 in den gewählten Mengenanteilen miteinander sorgfältig vermischt werden,

ii) das Gemisch (i) mit der berechneten Menge der Komponente B unter schnellem Rühren vermischt wird und

iii) das Gemisch (ii) in eine geschlossene Form mit einer Wandtemperatur von 2 bis 20 K oberhalb der Glasübergangstemperatur des starren Netzwerkes a2 gegossen und diese ggf. verschlossen und

iv) bei einer Temperatur von 2 bis 40 K oberhalb der Glasübergangstemperatur des starren Netzwerkes a2 1 Minute bis zu 24 Stunden ausgehärtet wird.

Geeignete Komponenten A1 sind z. B. auf Wasser, Ethylenglykol, Propylenglykol, Glycerin, Trimethylolpropan, Pentaerythrit, Glucose, epoxydiertem Ricinusöl, epoxydiertem Sojaöl oder epoxydiertem Leinöl gestartete anionische oder metallisch-koordinative Polymerisationsprodukte mit Ethylenoxid, Propylenoxid, Butylenoxid oder Gemischen davon, so dass diese eine Hydroxylfunktionalität von 2,1 bis 3,9 und Molmassen zwischen 2000 und 8000 aufweisen. Bevorzugt werden Umsetzungsprodukte des Propylenglykols oder Glycerins mit Propylenoxid und ggf. 2 bis 28 % Ethylenoxid zu Polyetheralkoholen der Hydroxylfunktionalität 2,1 bis 3,9 und Molmassen zwischen 2000 und 6000. Noch bevorzugter werden Umsetzungsprodukte des Glycerins mit Propylenoxid und ggf. 2 bis 12 % Ethylenoxid zu Polyetheralkoholen der Hydroxylfunktionalität 2,7 bis 3,0 und Molmassen zwischen 2000 und 6000 eingesetzt.

Geeignete Komponenten A2 sind z. B. auf Ethylendiamin, Diethylentriamin, Triethylentetramin, Propylendiamin, Dipropylentriamin, Tripropylentetramin oder höheren Homologen dieser Reihen addierte Alkylenoxide mit einer Hydroxylfunktionalität von 3 bis 6 und Molmassen von 600 bis 8000. Bevorzugt werden Additionsprodukte von Alkylenoxiden mit jeweils 2 bis 20 Einheiten je NH-Funktion auf Diethylentriamin, Triethylentetramin, Dipropylentriamin, Tripropylentetramin oder Gemischen davon mit einer Hydroxylfunktionalität von 3 bis 6 und Molmassen von 600 bis 4000. Noch bevorzugter werden Additionsprodukte von Propylenoxid mit jeweils 3 bis 12 Einheiten je NH-Funktion auf Diethylentriamin, Triethylentetramin, Dipropylentriamin, Tripropylentetramin oder Gemischen davon mit einer Hydroxylfunktionalität von 3 bis 6 und Molmassen von 600 bis 4000.

Geeignete Komponenten A3 sind z. B. N,N'-Dibutylethylendiamin, N,N',N''-Trimethyldiethylentriamin, N,N',N''-Trimethyldipropylentriamin, N,N',N''-Triethyldipropylentriamin, N,N',N''-Tripropylyldipropylentriamin, Piperazin, Bis-(N-ethylaminoethyl)piperazin, N,N'-Diethyldicyclohexylmethan-4,4'-diamin, Bis-(N-ethyl-propyl)ether, Bis-(N-ethyl-hexyl)ether, 4,4'-Bis(sec.-butylamino)dicyclohexylmethan, 1,4-Bis-(sec.-butylamino)cyclohexan, N,N'-Diethylisophorondiamin, N,N'-Di-isopropyl-isophorondiamin, N,N'-Diethyl-2,4-toluylendiamin, N,N'-Diethyl-2,6-toluylendiamin, N,N'-Dialkylamino-diphenylmethan, Diethylenglykol-bis(p-[N-alkyllaminobenzoat, N,N'-Diethylbiguanid usw. oder Gemische davon.

Bevorzugt werden solche Diamine eingesetzt, die eine zusätzliche Funktion aufweisen, z. B. UV-stabilisierende Wirkung, die Erhöhung der Hydrolysebeständigkeit oder eine biozide Wirkung. Diamine dieser bevorzugten Gruppe sind z. B. Bis-(N-ethyl-4-hexan)stilben, Bis-(N-ethylaminobutyl)piperazin, 2-Methylthio-4-tert-butylamino-6-cyclopropylamino-s-triazin, N-(Benzimidazol-2-yl)carbamidsäuremethylester, 5-Chlor-1-{1-[3-(2-oxo-2,3- dihydrobenzimidazol-1-yl)propyl]-4-piperidyl} -3H-benzimidazol-2-on, 4,5-Dichlor-2-(N,N'-diethyl-3,6-propyl)-n-octyl-4-isothiazolin-3-on usw.

Weitere geeignete sekundäre Di- und/oder Polyamine sind $\alpha,\omega$-Bis-(alkylamino)polyether auf der Basis von Polypropylenglykolen, Polybutylenglykolen oder Polybutadienen. Weiterhin sind geeignet N-Alkylamino-substituierte Polycarbonate, Polyester oder Polycaprolactone.

Erfindungsgemäß geeignete Katalysatoren aus der Gruppe der tertiären Amine sind z. B. Triethylendiamin, Bis-(2,2'-dimethyl-amino)ethylether, Triethylamin, N-Methylmorpholin, N,N-Diethylpiperazin, N,N-Dimethyl-benzylamin, N,N,N',N'-Tetramethylbutandiamin, Pentamethylpropylemtriamin, Pyridinoxid, Tetramethylguanidin, Gemische davon und weitere, in der Polyurethanchemie bekannte Katalysatoren.

Erfindungsgemäß geeignete Katalysatoren aus der Gruppe der metallorganischen Verbindungen sind z. B. zinn-, blei-, wismut- oder kupferorganische Verbindungen wie Dialkylsalze von Carbonsäuren, z. B. Dibutylzinndiacetat, Dibutylzinndilaurat, Dibutylzinn-C12- bis C14-carboxylat, Zinndioctoat, Zinndioleat, Dibutylzinn-bis-(4-methylaminobenzoat), Dibutylzinn-bis-(2-ethylhexyl-thioglykolsäure-ester), Dibutylzinndilaurylmercaptid, Bis-(tributylzinn)oxid usw.

Erfindungsgemäß geeignete Zusatzstoffe sind z. B. Aluminiumoxid, Aluminiumhydroxid, Aluminiumoxidhydroxid (Böhmit), Aluminiumoxidhydrat, Magnesiumoxid, Magnesiumhydroxid, Montmorrilonit, Laponit, Kreide, Bariumsulfat, Siliziumdioxid, pyrogene Kieselsäure, deren Teilchengröße zwischen 1 nm und 100 $\mu$m liegen kann, Bleidioxid, Bleichromat, Bleicarbonat, Calciumstearat, Bariumstearat usw.

Erfindungsgemäß geeignete Pigmente und Farbstoffe sind die üblicherweise zum Einfärben von Kunststoffen verwendeten, z. B. Titandioxid, Eisenoxide, Mangandioxid, Roterde, Zinkoxid, Monopolbrillantblau, Monopolbrillantrot etc.

Erfindungsgemäß geeignete Flammschutzmittel sind z. B. Aluminiumoxid, Aluminiumhydroxid, Aluminiumoxidhydroxid (Böhmit), Aluminiumoxidhydrat, Magnesiumoxid, Magnesiumhydroxid, Melamin, Melamincyanurat, Melaminpolyphosphat, Tris-(dichlorpropyl)phosphat, Tris(chlorethyl)phosphat, Phosphinsäureester, Octabrombiphenyl, Hexabromdiphenylether, chlorierte Paraffine, Ammoniumpolyphosphat, roter Phosphor etc. einschließlich Gemischen davon.

Erfindungsgemäß geeignete anorganische Stoffe zur Steuerung der Wärme- oder elektrischen Leitfähigkeit sind z. B. Siliciumcarbid, Graphit, Graphen, Kohlenstoffnanoröhrchen (carbon nano tubes), modifizierte Graphite und oberflächenmodifizierte Graphene.

Über die Komponente B wird außer über die Komponenten A1 bis A3 die Vernetzungsdichte und damit die Einstellung der Gradienten gesteuert. Dazu können handelsübliche Di- und/oder Polyisocyanate eingesetzt werden. Erfindungsgemäß geeignete Di- und/oder Polyisocyanate sind z. B. 4,4'-Diphenylmethandiisocyanat, 2,4'- Diphenylmethandiisocyanat, 2,2'-Diphenylmethandiisocyanat, 2,4-Toluylendiisocyanat, 2,6-Toluylendiisocyanat, Xylylendiisocyanat, 4,4'-Dicyclohexylmethandiisocyanat, Isophorondiisocyanat, Hexan-1,6-diisocyanat, trimeres Toluylendiisocyanat, Biuretisocyanat des Hexan-1,6-diisocyanats, 1,4-Cyclohexandiisocyanat, Methylcyclohexylendiisocyanat, m- oder p-Tetramethylxylylendiisocyanat, Tris-(4-isocyanatophenyl)-phosphat, Triphenylmethan-4,4',4"-triisocyanat, Uretdion eines der Isocyanate, technische Produkte wie polymeres Diphenylmethandiisocyanat (p-MDI), modifizierte Isocyanate auf der Basis eines der oben genannten Di- oder Triisocyanate sowie Gemische dieser Isocyanate.

Erfindungsgemäß können über die sog. Prepolymere die Gradienten sehr genau durch die Steuerung des Verzweigungsgrades, d. h. der Isocyanatfunktionalität, eingestellt werden. Zur Herstellung der Prepolymeren können die o. g. Di- oder Polyisocyanate eingesetzt werden. Zusätzlich dazu werden in einer Ausführungsform Hydroxylverbindungen mit einer Hydroxylfunktionalität zwischen 2 und 4 eingesetzt. Solche Hydroxylverbindungen sind z. B. Diethylenglykol, Triethylenglykol, höhere Polyethylenglykole bis zu einer Molmasse von 600, Dipropylenglykol, höhere Polypropylenglykole mit Molmassen bis zu 2000, Glycerin, Glycerin-Propylenoxid-Addukte mit Molmassen bis zu 800, Trimethylolpropan, Trimethylolpropan-Propylenoxid-Addukte mit Molmassen bis zu 800, Pentaerythrit-Propylenoxid-Addukte mit Molmassen bis zu 800, Polytetramethylenglykole mit Molmassen von 200 bis 2000 usw. Die Umsetzung zu den Prepolymeren erfolgt nach bekannten Verfahren bei erhöhter Temperatur. Das Verhältnis der Hydroxylgruppen zu den Isocyanatgruppen kann dabei zwischen 1 : 1,8 und 1 : 20 liegen, bevorzugt wird ein Verhältnis zwischen 1 : 2,1 und 1 : 6. Der Isocyanatgehalt der Prepolymeren soll zwischen 1,5 und 15 %, bevorzugt zwischen 4 und 9 % liegen.

In einer weiteren Ausführungsform werden die Prepolymeren aus den genannten Di- und/oder Polyisocyanaten und Aminoalkoholen wie Diethanolamin, Triethanolamin, Tetrakis-(2-hydroxyethyl)ethylendiamin, Tetrakis-(2-hydroxy-propyl)ethylendiamin, Tetrakis-(2-hydroxy-propyl)-N$^2$-methyl-dipropylentriamin usw. hergestellt.

In einer weiteren Ausführungsform werden die Prepolymeren aus den genannten Di- und/oder Polyisocyanaten und Di- und/oder Polyaminen herstellt, wodurch Prepolymere mit überwiegend Hamstoffbindungen, bei Einsatz von Hydroxyurethanen auch mit einer Mischung aus Harnstoff- und Urethanbindungen hergestellt werden. Geeignete Amine zur Herstellung dieser Gruppe von Prepolymeren sind α,ω-Bis-(alkylamino)polyether und die unter A3 genannten sekundären Amine oder Gemische davon sowie Polyhexamethylenbiguanid mit bis zu 12 wiederkehrenden Struktureinheiten.

Die Herstellung der erfindungsgemäßen Polymere oder Komposite mit Eigenschaftsgradienten über den Querschnitt eines Formteils erfolgt dadurch, dass zunächst ein Gemisch aus den Komponenten A1 bis A4 in den berechneten Verhältnissen hergestellt wird. Dabei wird die Komponente A1 derart ausgewählt, dass der Glasübergang ihres Polyurethans mit dem ausgewählten Di- und/oder Polyisocyanat mindestens 40 K unter dem des Polyurethans der Komponente A2 mit dem ausgewählten Di- und/oder Polyisocyanat und mindestens 75 K unter dem des Polyharnstoffs aus der Komponente A3 mit dem ausgewählten Di- und/oder Polyisocyanat liegt. Die Verhältnisse der Komponenten A1 zu A2 zu A3 werden derart ausgewählt, dass eine weitgehende Segregation der jeweiligen Netzwerke während der Polymerreaktion erfolgt, wobei im wesentlichen keine Durchdringung zu Durchdringungsnetzwerken (Interpenetrating Polymer Networks, IPN) erfolgen soll.

Die Komponente A als Gemisch aus den Komponenten A1 bis A4 wird anschließend mit der Komponente B in Form des/der ausgewählten Di- und/oder Polyisocyanat und/oder Prepolymer mit einem Isocyanat-Index von 80 bis 200, vorzugsweise 85 bis 135 und noch bevorzugter von 90 bis 120 intensiv vermischt. Der Isocyanatindex wird definiert als das Verhältnis von Hydroxyl-/Amingruppen zu den Isocyanatgruppen multipliziert mit 100 gemäß

$$\text{Isocyanatindex} = \frac{\Sigma \text{ Isocyanatgruppen x 100}}{\Sigma \text{ Hydroxyl-/Amingruppen}}$$

Das Reaktionsgemisch wird in eine Form vergossen, deren Wandtemperatur auf einen Wert von 2 bis 20 K oberhalb der Glasübergangstemperatur (gemessen mittels DMA) des Polyurethans der Komponente A2 mit dem ausgewählten Di- und/oder Polyisocyanat eingestellt wird. Durch diese Temperatur verbleibt auch das Netzwerk aus dem Polyurethan der Komponente A2 mit dem ausgewählten Di- und/oder Polyisocyanat im viskoelastischen Zustand und kann innerhalb der Zeit des Verbleibens in der Form weiter segregieren und an die Wandung der Form gedrückt werden. Es ist ein wesentlicher Bestandteil des erfindungsgemäßen Verfahrens, dass die Werkzeugtemperatur zur Herstellung der Formteile wenigstens 2 K, bevorzugt 5 bis 10 K, oberhalb der Glasübergangstemperatur (gemessen mittels DMA) des Polyurethans der Komponente A2 mit dem ausgewählten Di- und/oder Polyisocyanat eingestellt wird.

Beispielhaft werden ein erfindungsgemäßes Gemisch und dessen Verarbeitung dargestellt: Das Gemisch wird hergestellt aus

A1) 650 g eines Polyethertriols auf Basis Glycerin und Propylenoxid der Molmasse 3000 (Hydroxylzahl 55 mg KOH/g), entsprechend 0,65 Äquivalenten OH,

A2) 81,5 g eines Aminpolyethertetrols auf der Basis Ethylendiamin und Propylenoxid mit der Molmasse 1100 (Hydroxylzahl 206 mg KOH/g), entsprechend 0,30 Äquivalenten OH,

A3) 6,3 g Bis-(N-ethyl-propyl)piperazin (Amin-Äquivalent 125 g), entsprechend 0,05 Äquivalenten NH,

A4) 0,15 g Zinndioctoat,

A5) 2,5 g nanoskaliges Aluminiumoxidhydroxid

und eine Stunde mittels Propellerrührer in einem Edelstahlbehälter von 1,5 l Inhalt bei Umgebungstemperatur unter Stickstoff gerührt.

Zu dem Gemisch werden 247 g eines Prepolymeren, das aus 4,4'-Dicyclohexylmethandiisocyanat und $\alpha,\omega$-Diamino-polytetramethylenoxid der Molmasse 800 mit einem Isocyanatgehalt von 9,6 % hergestellt wurde, mit einem Isocyanatindex von 108 (8 % rechnerischer Überschuss an Isocyanatgruppen) gegeben und 10 s mit einem Schnellrührer vermischt. Das Gemisch wird in eine Form von 900 ml Inhalt mit einer Innenwandtemperatur von 45°C (d. h. 9 K oberhalb des Glasübergangs der Komponente A2 mit der Komponente B) gegeben und bei dieser Temperatur zwei Stunden belassen. Danach wird entformt. Man erhält ein Formteil von 25 mm Stärke, dessen Außenschicht eine Shore-A-Härte von 92 und dessen Kern eine Shore-A-Härte von 73 aufweisen.

Die mittels DMA als Maximum der tan $\delta$-Kurve bestimmten Glasübergangstemperaturen der als Komponente A1 bis A3 verwendeten Ausgangsstoffe mit 4,4'-Dicyclohexylmethandiisocyanat waren:

| | |
|---|---|
| Polyetheralkohol aus Glycerin und Propylenoxid der Molmasse 3000 | -45°C, |
| Polyaminetheralkohol auf Basis Ethylendiamin und Propylenoxid | +36°C, |
| Bis-(N-ethyl-propyl)piperazin | +143°C. |

Die Differenz der Glasübergangstemperaturen der Polyurethane aus A1 und A2 beträgt 81 K, die des Polyurethans auf Basis A2 und des Polyharnstoffs auf Basis A3 107 K.

Die erfindungsgemäßen Polymere oder Komposite mit Eigenschaftsgradienten über den Querschnitt eines Formteils werden zur Herstellung von hartelastischen Formteilen mit weichelastischen Einlagen, die in einem "Schuss" hergestellt werden können, mit einstellbaren weiteren Eigenschaften wie hoher Wärmeleitfähigkeit, einstellbarer elektrischer Leitfähigkeit oder hohem Flammschutz z. B. in der Elektroindustrie oder im Fahrzeugbau verwendet.

**Ausführungsbeispiele**

In den Beispielen verwendete Ausrüstung und Vorprodukte:

Werkzeug 1 (als W1 bezeichnet): Quaderförmiger Hohlkörper von 200 mm Länge und einem 50 x 50 mm messenden Querschnitt der Kavität aus mit Silicium legiertem Aluminium, innen hochglanzpoliert, die Wandung als Doppelwand mit Thermostatanschluss ausgelegt mit 6 mm starken Kanälen für die Temperierflüssigkeit Wasser oder Wasser-Glykolgemisch.

Werkzeug 2 (als W2 bezeichnet): Zylinderförmiger Hohlkörper von 200 mm Länge und einem 50 mm messenden runden Querschnitt der Kavität aus mit Silicium legiertem Aluminium, innen hochglanzpoliert, die Wandung als Doppelwand mit Thermostatanschluss ausgelegt mit 6 mm starken Kanälen für die Temperierflüssigkeit Wasser oder Wasser-Glykolgemisch.

Prepolymer 1 (als B1 bezeichnet): Hergestellt aus 4480 g 4,4'-Dicyclohexylmethandiisocyanat, 1200 g Polypropylenglykol 400 und 510 g eines Glycerin-Propylenoxid-Polyetheralkohols der Molmasse 400 in einem Rührreaktor bei 65 bis 75°C, Isocyanatäquivalent 250 g/Äquivalent

Prepolymer 2 (als B2 bezeichnet): Hergestellt aus 4380 4,4'-Diphenylmethandiisocyanat, 1200 g Polypropylenglykol 400 und 510 g eines Glycerin-Propylenoxid-Polyetheralkohols der Molmasse 400 in einem Rührreaktor bei 65 bis 75°C, Isocyanatäquivalent 244 g/Äquivalent

Prepolymer 3 (als B3 bezeichnet): Hergestellt aus 4380 4,4'-Diphenylmethandiisocyanat, 1200 g Polypropylenglykol 400 und 400 g Piperazin-N,N-bis-(N-methyl-isopropylenamin) in einem Rührreaktor bei 65 bis 75°C, Isocyanatäquivalent 240 g/Äquivalent

Prepolymer 4 (als B4 bezeichnet): Hergestellt aus 5040 g Hexan-1,6-diisocyanat und 400 g eines α,ω-Diaminopolyethers der Molmasse 600 und eines Katalysators zur Trimerisierung von Isocyanatgruppen (PC Cat V101) bei 70 bis 85°C, Isocyanatäquivalent 206 g/Äquivalent

Beispiel 1

Eine A-Komponente wird in einem Schnellmischer hergestellt aus 600 g eines Polyethertriols auf Basis Glycerin und Propylenoxid der Molmasse 3000 (Hydroxylzahl 55 mg KOH/g), entsprechend 0,60 Äquivalenten OH, 81,5 g eines Aminpolyethertetrols auf der Basis Ethylendiamin und Propylenoxid mit der Molmasse 1100 (Hydroxylzahl 206 mg KOH/g), entsprechend 0,30 Äquivalenten OH, 6,3 g Bis-(N-ethyl-propyl)piperazin (Amin-Äquivalent 125 g), entsprechend 0,05 Äquivalenten NH, 0,15 g Zinndioctoat und 2,5 g nanoskaligem Aluminiumoxidhydroxid als 5%ige Dispersion in 50 g des Polyethertriols (24 Stunden bei hoher Scherkraft in einer Kneterkammer dispergiert bis zur vollständigen Klarheit), entsprechend 0,05 Äquivalenten OH.

370 g der A-Komponente werden mit 130 g B2 mittels eines Rührers von 5000 min$^{-1}$ innerhalb von 8 s vermischt, kurz bei 0,1 mm entgast und in das auf 47,5°C erwärmte Werkzeug W1 gefüllt. Dieses wird sofort verschlossen und verklammert. Nach 1 Stunde wird das Werkzeug geöffnet und das ausgehärtete Polymer entnommen.

Man erhält einen quaderförmigen Körper mit einer sehr harten Außenschicht, der in sich jedoch elastisch ist. Die Messung der Härte über dem. Querschnitt ergab eine Shore-A-Härte in der Außenschicht von 92, in der Innenschicht (20 mm von der Randzone entfernt) eine Shore-A-Härte von 36. Die Zugfestigkeit der Außenschicht (5 mm Stäbe von 100 x 10 mm) ergab einen Wert von 32 MPa. Mittels AFM konnten eine starke Phasentrennung in der Außenschicht mit einer Vielzahl von Agglomeraten und im Gegensatz dazu sehr wenig Phasenbildung im Innenkörper nachgewiesen werden.

Beispiel 2

Eine A-Komponente wird in einem Schneilmischer hergestellt aus 400 g eines Polyethertriols auf Basis Glycerin und Propylenoxid der Molmasse 3000 (Hydroxylzahl 55 mg KOH/g), entsprechend 0,40 Äquivalenten OH, 200 g eines Polyetherdiols auf Basis Propylenoxid der Molmasse 2000 (Hydroxylzahl 55 mg KOH/g), entsprechend 0,20 Äquivalenten OH, 81,5 g eines Aminpolyethertetrols auf der Basis Ethylendiamin und Propylenoxid mit der Molmasse 1100 (Hydroxylzahl 206 mg KOH/g), entsprechend 0,30 Äquivalenten OH, 6,3 g Bis-(N-ethylpropyl)piperazin (Amin-Äquivalent 125 g), entsprechend 0,05 Äquivalenten NH, 0,15 g Zinndioctoat und 2,5 g nanoskaligem Aluminiumoxidhydroxid als 5%ige Dispersion in 50 g des Polyethertriols (24 Stunden bei hoher Scherkraft in einer Kneterkammer dispergiert bis zur vollständigen Klarheit), entsprechend 0,05 Äquivalenten OH.

370 g der A-Komponente werden mit 130 g B2 mittels eines Rührers von 5000 min$^{-1}$ innerhalb von 8 s vermischt, kurz bei 0,1 mm entgast und in das auf 48,5°C erwärmte Werkzeug W1 gefüllt. Dieses wird sofort verschlossen und verklammert. Nach 1,5 Stunden wird das Werkzeug geöffnet und das ausgehärtete Polymer entnommen.

Man erhält einen quaderförmigen Körper mit einer harten Außenschicht, der in sich jedoch elastisch ist. Die Messung der Härte über dem Querschnitt ergab eine Shore-A-Härte in der Außenschicht von 86, in der Innenschicht (20 mm von der Randzone entfernt) eine Shore-A-Härte von 38. Die Zugfestigkeit der Außenschicht (5 mm Stäbe von 100 x 10 mm) ergab einen Wert von 22 MPa. Mittels AFM konnten eine starke Phasentrennung in der Außenschicht mit einer Vielzahl von Agglomeraten und im Gegensatz dazu sehr wenig Phasenbildung im Innenkörper nachgewiesen werden.

Beispiel 3

Eine A-Komponente wird in einem Schneilmischer hergestellt aus 500 g eines Polyethertriols auf Basis Glycerin und Propylenoxid der Molmasse 3000 (Hydroxylzahl 55 mg KOH/g), entsprechend 0,50 Äquivalenten OH, 100 g eines Polyetherdiols auf Basis Propylenoxid der Molmasse 2000 (Hydroxylzahl 55 mg KOH/g), entsprechend 0,10 Äquivalenten OH, 81,5 g eines Aminpolyethertetrols auf der Basis Ethylendiamin und Propylenoxid mit der Molmasse 1100 (Hydroxylzahl 206 mg KOH/g), entsprechend 0,30 Äquivalenten OH, 6,3 g Bis-(N-ethylpropyl)piperazin (Amin-Äquivalent 125 g), entsprechend 0,05 Äquivalenten NH, 0,25 g Dibutylzinn-bis(2-ethylhexylthioglykolat) und 2,5 g nanoskaligem Aluminiumoxidhydroxid als 5%ige Dispersion in 50 g des Polyethertriols (24 Stunden bei hoher Scherkraft in einer Kneterkammer dispergiert bis zur vollständigen Klarheit), entsprechend 0,05 Äquivalenten OH.

370 g der A-Komponente werden mit 132 g B1 mittels eines Rührers von 5000 min$^{-1}$ innerhalb von 8 s vermischt, kurz bei 0,1 mm entgast und in das auf 49,0°C erwärmte Werkzeug W1 gefüllt. Dieses wird sofort verschlossen und verklammert. Nach 1,2 Stunden wird das Werkzeug geöffnet und das ausgehärtete Polymer entnommen.

Man erhält einen quaderförmigen Körper mit einer harten Außenschicht, der in sich jedoch elastisch ist. Die Messung der Härte über dem Querschnitt ergab eine Shore-A-Härte in der Außenschicht von 85, in der Innenschicht (20 mm von der Randzone entfernt) eine Shore-A-Härte von 34. Die Zugfestigkeit der Außenschicht (5 mm Stäbe von 100 x 10 mm) ergab einen Wert von 20,4 MPa. Mittels AFM konnten eine starke Phasentrennung in der Außenschicht mit einer Vielzahl von Agglomeraten und im Gegensatz dazu sehr wenig Phasenbildung im Innenkörper nachgewiesen werden.

Beispiel 4

Eine A-Komponente wird in einem Schnellmischer hergestellt aus 300 g eines Polyethertriols auf Basis Glycerin und Propylenoxid der Molmasse 3000 (Hydroxylzahl 55 mg KOH/g), entsprechend 0,30 Äquivalenten OH, 200 g eines Polyetherdiols auf Basis Propylenoxid der Molmasse 2000 (Hydroxylzahl 55 mg KOH/g), entsprechend 0,20 Äquivalenten OH, 81,5 g eines Aminpolyethertetrols auf der Basis Ethylendiamin und Propylenoxid mit der Molmasse 1100 (Hydroxylzahl 206 mg KOH/g), entsprechend 0,30 Äquivalenten OH, 60 g eines $\alpha,\omega$-Diaminopolyethers der Molmasse 600, entsprechend 0,1 NH-Äquivalente, 6,3 g Bis-(N-ethylpropyl)piperazin (Amin-Äquivalent 125 g), entsprechend 0,05 Äquivalenten NH, 0,15 g Dibutylzinn-bis(2-ethylhexylthioglykolat) und 2,5 g nanoskaligem Aluminiumoxidhydroxid als 5%ige Dispersion in 50 g des Polyethertriols (24 Stunden bei hoher Scherkraft in einer Kneterkammer dispergiert bis zur vollständigen Klarheit), entsprechend 0,05 Äquivalenten OH.

382 g der A-Komponente werden mit 113 g B2 mittels eines Rührers von 5000 min$^{-1}$ innerhalb von 8 s vermischt, kurz bei 0,1 mm entgast und in das auf 45,0°C erwärmte Werkzeug W1 gefüllt. Dieses wird sofort verschlossen und verklammert. Nach 1,5 Stunden wird das Werkzeug geöffnet und das ausgehärtete Polymer entnommen.

Man erhält einen quaderförmigen Körper mit einer harten Außenschicht, der in sich jedoch elastisch ist. Die Messung der Härte über dem Querschnitt ergab eine Shore-A-Härte in der Außenschicht von 89, in der Innenschicht (20 mm von der Randzone entfernt) eine Shore-A-Härte von 36. Die Zugfestigkeit der Außenschicht (5 mm Stäbe von 100 x 10 mm) ergab einen Wert von 25,5 MPa. Mittels AFM konnten eine starke Phasentrennung in der Außenschicht mit einer Vielzahl von Agglomeraten und im Gegensatz dazu sehr wenig Phasenbildung im Innenkörper nachgewiesen werden.

Beispiel 5

Eine A-Komponente wird in einem Schnellmischer hergestellt aus 300 g eines Polyethertriols auf Basis Glycerin und Propylenoxid der Molmasse 3000 (Hydroxylzahl 55 mg KOH/g), entsprechend 0,30 Äquivalenten OH, 200 g eines Polyetherdiols auf Basis Propylenoxid der Molmasse 2000 (Hydroxylzahl 55 mg KOH/g), entsprechend 0,20 Äquivalenten OH, 81,5 g eines Aminpolyethertetrols auf der Basis Ethylendiamin und Propylenoxid mit der Molmasse 1100 (Hydroxylzahl 206 mg KOH/g), entsprechend 0,30 Äquivalenten OH, 60 g eines $\alpha,\omega$-Diaminopolyethers der Molmasse 600, entsprechend 0,1 NH-Äquivalente, 6,3 g Bis-(N-ethylpropyl)piperazin (Amin-Äquivalent 125 g), entsprechend 0,05 Äquivalenten NH, 0,15 g Dibutylzinn-bis(2-ethylhexylthioglykolat) und 2,5 g nanoskaligem Aluminiumoxidhydroxid als 5%ige Dispersion in 50 g des Polyethertriols (24 Stunden bei hoher Scherkraft in einer Kneterkammer dispergiert bis zur vollständigen Klarheit), entsprechend 0,05 Äquivalenten OH.

289 g der A-Komponente werden mit 104 g B1 mittels eines Rührers von 5000 min$^{-1}$ innerhalb von 8 s vermischt, kurz bei 0,1 mm entgast und in das auf 50,0°C erwärmte Werkzeug W2 gefüllt. Dieses wird sofort verschlossen und verklammert. Nach 1 Stunde wird das Werkzeug geöffnet und das ausgehärtete Polymer entnommen.

Man erhält einen zylinderförmigen Körper mit einer harten Außenschicht, der in sich jedoch elastisch ist. Die Messung der Härte über dem Querschnitt ergab eine Shore-A-Härte in der Außenschicht von 87, in der Innenschicht (20 mm von der Randzone entfernt) eine Shore-A-Härte von 37. Die Zugfestigkeit der Außenschicht (5 mm Stäbe von 100 x 10 mm) ergab einen Wert von 21,8 MPa. Mittels AFM konnten eine starke Phasentrennung in der Außenschicht mit einer Vielzahl von Agglomeraten und im Gegensatz dazu sehr wenig Phasenbildung im Innenkörper nachgewiesen werden.

Beispiel 6

Eine A-Komponente wird in einem Schneilmischer hergestellt aus 6050 g eines Polyethertriols auf Basis Glycerin, Propylenoxid und 8 % Ethylenoxid als Endblock der Molmasse 6000 (Hydroxylzahl 27,8 mg KOH/g), entsprechend 1,0 Äquivalenten OH, 150 g eines Aminpolyethertetrols auf der Basis Ethylendiamin und Propylenoxid mit der Molmasse 300 (Hydroxylzahl 746 mg KOH/g), entsprechend 0,50 Äquivalenten OH, 25 g Bis-(N-ethyl-propyl)piperazin (Amin-Äquivalent 125 g), entsprechend 0,2 Äquivalenten NH, 0,5 g Dibutylzinn-bis(2-ethylhexylthioglykolat) und 6 g nanoskaligem Aluminiumoxidhydroxid als 10%ige Dispersion in 60 g des Polyethertriols (24 Stunden bei hoher Scherkraft in einer Kneterkammer dispergiert bis zur vollständigen Klarheit), entsprechend 0,01 Äquivalenten OH.

368 g der A-Komponente werden mit 13 g 4,4-Dicyclohexylmethandiisocyanat mittels eines Rührers von 5000 min$^{-1}$ innerhalb von 10 s vermischt, kurz bei 0,1 mm entgast und in das auf 55,0°C erwärmte Werkzeug W2 gefüllt. Dieses wird sofort verschlossen und verklammert. Nach 1 Stunde wird das Werkzeug geöffnet und das ausgehärtete Polymer entnommen.

Man erhält einen zylinderförmigen Körper mit einer harten Außenschicht, der in sich jedoch elastisch ist. Die Messung der Härte über dem Querschnitt ergab eine Shore-A-Härte in der Außenschicht von 84, in der Innenschicht (20 mm von der Randzone entfernt) eine Shore-A-Härte von 41. Die Zugfestigkeit der Außenschicht (5 mm Stäbe von 100 x 10 mm) ergab einen Wert von 16,6 MPa. Mittels AFM konnten eine starke Phasentrennung in der Außenschicht mit einer Vielzahl von Agglomeraten und im Gegensatz dazu sehr wenig Phasenbildung im Innenkörper nachgewiesen werden.

## Patentansprüche

1. Verfahren zur Herstellung von Formkörpern, die Polyadditionsprodukte enthalten, durch Einbringen eines Gemisches von Reaktanden in eine Form und anschließender Durchführung der Polyaddition, wobei das Reaktionsgemisch enthält

> A1) 40 bis 90 Gew.-% ein oder mehrere Polyetherpolyole der Hydroxylfunktionalität 2,1 bis 3,9 mit Molmassen zwischen 2000 und 8000,
> A2) 5 bis 40 Gew.-% ein oder mehrere Additionsprodukte aus Di- und/oder Polyaminen und Alkylenoxiden mit einer Hydroxylfunktionalität 3,0 bis 6,0 mit Molmassen zwischen 300 und 8000,
> A4) 0,001 bis 5 Gew.-% ein oder mehrere Katalysatoren ausgewählt aus der Gruppe der tertiären Amine und/oder der metallorganischen Verbindungen,
> B) ein oder mehrere Di- und/oder Polyisocyanate einschließlich Prepolymere auf deren Basis in einer Menge, die 50 bis 200 % der zur stöchiometrischen Umsetzung erforderlichen Menge entspricht,
> zur Reaktion gebracht werden, **dadurch gekennzeichnet, dass** das Reaktionsgemisch
> A3) 0,1 bis 20 Gew.-% ein oder mehrere Di- und/oder Polyamine mit vorzugsweise sekundären Aminogruppen enthält, und
> an der Wandung der Form eine Temperatur eingestellt wird, die mindestens 2 K oberhalb der Glasübergangstemperatur des entstehenden Polyurethans der Komponente A2 liegt.

2. Verfahren nach Anspruch 1, **dadurch gekennzeichnet, dass** eine weitere Komponente A5) Zusatzstoffe wie anorganische Füllstoffe einschließlich nanoskalige Partikel, Pigmente, Farbstoffe, Flammschutzmittel, anorganische Stoffe zur Steuerung der Wärme- oder der elektrischen Leitfähigkeit dem Reaktionsgemisch zugesetzt wird.

3. Verfahren nach einem der Ansprüche 1 bis 2, **dadurch gekennzeichnet, dass** die Temperatur der Wandung der Form wenigstens 2 K oberhalb der mittels DMA gemessenen Glasübergangstemperatur des Polyurethans der Komponente A2 mit dem ausgewählten Di- und/oder Polyisocyanat eingestellt wird.

4. Verfahren nach einem der Ansprüche 1 bis 3, **dadurch gekennzeichnet, dass** die Temperatur der Wandung der Form 5 bis 10 K oberhalb der mittels DMA gemessenen Glasübergangstemperatur des Polyurethans der Komponente A2 mit dem ausgewählten Di-und/oder Polyisocyanat eingestellt wird.

5. Verfahren nach einem der Ansprüche 1 bis 4, **dadurch gekennzeichnet, dass** die Komponenten A1 bis A4 oder A1 bis A5 in den gewählten Mengenanteilen miteinander sorgfältig vermischt werden,
das entstandene Gemisch mit der berechneten Menge der Komponente B unter schnellem Rühren vermischt wird,
das nun vorliegende Reaktionsgemisch in eine Form mit einer Wandungstemperatur von 2 bis 20 K oberhalb der Glasübergangstemperatur des Polyurethans der Komponente A2 eingebracht wird,
das Werkzeug/die Form verschlossen wird und
schließlich das Reaktionsgemisch bei einer Temperatur von 2 bis 40 K oberhalb der Glasübergangstemperatur des Polyurethans der Komponente A2 eine Minute bis zu 24 Stunden ausgehärtet wird.

6. Verfahren nach einem der Ansprüche 1 bis 5, **dadurch gekennzeichnet, dass** als Komponente B Isocyanat-Prepolymere mit einer Isocyanatfunktionalität von 2 bis 4 und einem Isocyanatgehalt von 3 bis 12 % eingesetzt werden.

7. Verfahren nach einem der Ansprüche 1 bis 6, **dadurch gekennzeichnet, dass** als Komponente A5 nanoskaliges (d. h. mit einem Teilchengrößenmaximum von 1 bis 600 nm) Aluminiumoxid, Aluminiumhydroxid, Aluminiumoxidhydroxid (Böhmit), Aluminiumoxidhydrat, Magnesiumoxid, Magnesiumhydroxid, Montmorrilonit und/oder Laponit eingesetzt werden.

8. Verfahren nach einem der Ansprüche 1 bis 7, **dadurch gekennzeichnet, dass** als Komponente A5 nanoskaliges (d. h. mit einem Teilchengrößenmaximum von 1 bis 600 nm) Siliciumcarbid, Graphit, Graphen oder modifizierte Graphite oder modifizierte Graphene eingesetzt werden.

9. Verfahren nach einem der Ansprüche 1 bis 8, **dadurch gekennzeichnet, dass** die Prepolymeren aus den genannten Di- und/oder Polyisocyanaten und Aminoalkoholen wie Diethanolamin, Triethanolamin, Tetrakis-(2-hydroxyethyl)ethylendiamin, Tetrakis-(2-hydroxypropyl)ethylendiamin, Tetrakis-(2-hydroxy-propyl)-N$^2$-methyl-dipropylentri-amin hergestellt werden.

10. Formkörper aus Polyadditionsprodukten, **dadurch gekennzeichnet, dass** sie gemäß der Ansprüche 1 bis 9 herstellbar sind und
50 bis 90 % eines elastischen Netzwerkes mit einer Glasübergangstemperatur des Polyurethans der Komponente A1 zwischen -52 und -12°C,
3 bis 40 % eines starren Netzwerkes mit einer Glasübergangstemperatur des Polyurethans der Komponente A2 zwischen +20 und +120°C und
1 bis 20 % eines starren Polyharnstoff-Netzwerkes mit einer Glasübergangstemperatur des Polyharnstoffes der Komponente A3 zwischen +50 und +240°C aufweisen,
wobei die Glasübergangstemperaturen mittels DMA gemessen sind.

11. Formkörper nach Anspruch 10, **dadurch gekennzeichnet, dass** das starre Netzwerk mit einer Glasübergangstemperatur des Polyurethans der Komponente A2 zwischen +20 und +120°C überwiegend in den Randbereichen des Formkörpers ausgebildet ist.

12. Formkörper nach einem der Ansprüche 10 bis 11, **dadurch gekennzeichnet, dass** die Härtegradienten eine Härtedifferenz von über 10 Shore-A-Einheiten aufweisen.

13. Formkörper nach einem der Ansprüche 10 bis 12, **dadurch gekennzeichnet, dass** die Härtegradienten eine Härtedifferenz von Shore-A-Einheiten zwischen 20 und 70 aufweisen.

**Claims**

1. A process for producing moldings containing polyaddition products by introducing a mixture of reactants into a mold and subsequently carrying out the polyaddition, wherein the reaction mixture contains

A1) 40 to 90% by weight of one or more polyether polyols having a hydroxyl functionality of 2.1 to 3.9 and molar masses between 2000 and 8000.
A2) 5 to 40% by weight of one or more addition products of diamines and/or polyamines and alkylene oxides having a hydroxyl functionality of 3.0 to 6.0 and molar masses between 300 and 8000,
A4) 0.001 to 5% by weight of one or more catalysts selected from the group consisting of tertiary amines and/or metal-organic compounds,
B) one or more diisocyanates and/or polyisocyanates including prepolymers based thereon are reacted in a quantity which corresponds to 50 to 200% of the quantity required for stoichiometric reaction,
**characterized in that** the reaction mixture contains
A3) 0.1 to 20% by weight of one or more diamines and/or polyamines having preferably secondary amino groups, and
a temperature which is at least 2 K above the glass transition temperature of the resulting polyurethane of the component A2 is set at the wall of the mold.

2. The process according to Claim 1, **characterized in that** an additional component A5) of additives such as inorganic fillers including nanoscale particles, pigments, dyes, flame retardants and inorganic substances for controlling thermal conductivity or electric conductivity
is added to the reaction mixture.

3. The process according to any one of Claims 1 to 2, **characterized in that** the temperature of the wall of the mold is set at least 2 K above the glass transition temperature of the polyurethane of the component A2, which is measured by means of DMA, with the selected diisocyanate and/or polyisocyanate.

4. The process according to any one of Claims 1 to 3, **characterized in that** the temperature of the wall of the mold is set 5 to 10 K above the glass transition temperature of the polyurethane of the component A2, which is measured by means of DMA, with the selected diisocyanate and/or polyisocyanate.

5. The process according to any one of Claims 1 to 4, **characterized in that** the components A1 to A4 or A1 to A5 are carefully mixed with one another in the selected quantity proportions,
the resulting mixture is mixed with the calculated quantity of the component B and then stirred rapidly,
the reaction mixture thus formed is introduced into a mold having a wall temperature of 2 to 20 K above the glass transition temperature of the polyurethane of the component A2,
the tool/mold is sealed and
the reaction mixture is finally hardened at a temperature of 2 to 40 K above the glass transition temperature of the polyurethane of the component A2 for a minute up to 24 hours.

6. The process according to any one of Claims 1 to 5, **characterized in that** isocyanate prepolymers having an isocyanate functionality of 2 to 4 and an isocyanate content of 3 to 12% are used as component B.

7. The process according to any one of Claims 1 to 6, **characterized in that** nanoscale (i.e. having a particle size maximum of 1 to 600 nm) aluminum oxide, aluminum hydroxide, aluminum oxide hydroxide (boehmite), aluminum oxide hydrate, magnesium oxide, magnesium hydroxide, montmorrilonite and/or laponite is/are used as component A5.

8. The process according to any one of Claims 1 to 7, **characterized in that** nanoscale (i.e. having a particle size maximum of 1 to 600 nm) silicon carbide, graphite, graphene or modified graphites or modified graphenes is/are used as component A5.

9. The process according to any one of Claims 1 to 8, **characterized in that** the prepolymers are produced from the named diisocyanates and/or polyisocyanates and amino alcohols such as diethanolamine, triethanolamine, tetrakis-(2-hydroxyethyl)ethylenediamine, tetrakis-(2 hydroxypropyl)ethylenediamine, tetrakis-(2-hydroxypropyl)-N$^2$-methyl-dipropylenetriamine.

10. A mold made of polyaddition products, **characterized in that** they can be produced according to Claims 1 to 9 and have
50 to 90% of an elastic network having a glass transition temperature of the polyurethane of the component A1 between -52 and -12°C,
3 to 40% of a rigid network having a glass transition temperature of the polyurethane of the component A2 between +20 and +120°C and
1 to 20% of a rigid polyurea network having a glass transition temperature of the polyurea substance of the component A3 between +50 and +240°C,
wherein the glass transition temperatures are measured by means of DMA.

11. The mold according to Claim 10, **characterized in that** the rigid network having a glass transition temperature of the polyurethane of the component A2 between +20 and +120°C is predominantly formed in the marginal regions of the mold.

12. The mold according to any one of Claims 10 to 11, **characterized in that** the hardness gradients have a hardness difference of more than 10 Shore A units.

13. The mold according to any one of Claims 10 to 12, **characterized in that** the hardness gradients have a hardness difference of between 20 and 70 Shore A units.

**Revendications**

1. Procédé pour la fabrication de corps moulés, lesquels contiennent des produits de polyaddition, par l'apport d'un mélange de réactifs dans un moule et par l'exécution ultérieure de la polyaddition, le mélange réactionnel comprenant

   A1) de 40 à 90 % massique d'un ou de plusieurs polyéthers polyols de fonctionnalité hydroxyle 2,1 avec 3,9, avec masse molaire entre 2 000 et 8 000,
   A2) de 5 à 40 % massique d'un ou de plusieurs produits d'addition composés de diamines et/ou de polyamines et d'alkylénoxides de fonctionnalité hydroxyle 3,0 à 6,0, avec une masse molaire entre 300 et 8 000,
   A4) de 0,001 a 5 % massique d'un ou de plusieurs catalysateurs sélectionnés parmi le groupe des amines tertiaires et/ou des composés organométalliques,
   B) un ou plusieurs diisocyanates et/ou polyisocyanates, y compris des pré-polymères sur la base de ceux-ci en une quantité correspondant à entre 50 et 200 % de la quantité nécessaire à la réaction stoechiométrique, mis à réagir, **caractérisé en ce que** le mélange réactionnel comprend
   A3) entre 0,1 et 20 % massique d'un ou de plusieurs diamines et/ou polyamines avec de préférence des groupes amino secondaires, et
   une température est appliquée à la paroi du moule, laquelle est supérieure d'au moins 2 K à la température de transition vitreuse du polyuréthane du composant A2 se formant.

2. Procédé selon la revendication 1, **caractérisé en ce qu'**un autre composant A5) additifs tels que des charges inorganiques, y compris des particules à l'échelle nanométrique, pigments, colorants, moyens ignifuges, substances inorganiques, est ajouté au mélange réactionnel en vue du contrôle de la conductivité thermique ou électrique.

3. Procédé selon l'une des revendications 1 à 2, **caractérisé en ce que** la température de la paroi du moule est portée à au moins 2 K au-dessus de la température de transition vitreuse du polyuréthane du composant A2 avec le diisocyanate et/ou le polyisocyanate sélectionné, mesurée au moyen de l'AMD.

4. Procédé selon l'une des revendications 1 à 3, **caractérisé en ce que** la température de la paroi du moule est portée à entre 5 et 10 K au-dessus de la température de transition vitreuse du polyuréthane du composant A2 avec le diisocyanate et/ou le polyisocyanate sélectionné, mesurée au moyen de l'AMD.

5. Procédé selon l'une des revendications 1 à 4, **caractérisé en ce que**
   les composants A1 à A4 ou A1 à A5 sont soigneusement mélangés entre eux dans les proportions sélectionnées
   le mélange produit est mélangé sous vive agitation avec la quantité calculée du composant B,
   le mélange réactionnel désormais existant est placé dans un moule avec une température de paroi entre 2 et 20 K au-dessus de la température de transition vitreuse du polyuréthane du composant A2.
   l'outil/le moule est fermé et
   enfin, le mélange réactionnel est durci entre une minute et 24 heures, avec une température de paroi entre 2 et 40 K au-dessus de la température de transition vitreuse du polyuréthane du composant A2.

6. Procédé selon l'une des revendications 1 à 5, **caractérisé en ce que** des pré-polymères d'isocyanate avec une fonctionnalité isocyanate de 2 à 4 et une teneur en isocayanate entre 3 et 12 % sont employés en tant que composant B.

7. Procédé selon l'une des revendications 1 à 6, **caractérisé en ce que** de l'oxyde d'aluminium, de l'hydroxyde d'aluminium, de l'oxyhydroxyde d'aluminium (boehmite), de l'hydrate d'alumine, de l'oxyde de magnésium, de l'hydroxyde de magnésium, de la montmorillonite et/ou de la laponite à l'échelle nanométrique (c'est-à-dire avec une taille de particules maximum de 1 à 600 nm) sont employés comme composant A5.

8. Procédé selon l'une des revendications 1 à 7, **caractérisé en ce que** du carbure de silicium, du graphite, du graphène ou des graphites modifiés ou des graphènes modifiés, à l'échelle nanométrique (c'est-à-dire avec une taille de particules maximum de 1 à 600 nm), sont employés comme composant A5.

9. Procédé selon l'une des revendications 1 à 8, **caractérisé en ce que**
   des pré-polymères sont fabriqués à partir des diisocyanates et/ou des polyisocyanates susmentionnés et d'aminoalcools tels que la diéthanolamine, la triéthanolamine, la tétrakis-(2-hydroxyéthyl)éthylènediamine, la tétrakis-(2-hydroxypropyl)éthylènediamine, la tétrakis-(2-hydroxy-propyl)-N$^2$-méthyl-dipropylènetriamine.

**10.** Corps moulés en produits de polyaddition, **caractérisés en ce qu'**ils peuvent être fabriqués conformément aux revendications 1 à 9 et **en ce qu'**ils présentent

entre 50 et 90 % d'un réseau élastique avec une température de transition vitreuse du polyuréthane du composant A1 entre -52 °C et -12 °C,

entre 3 et 40 % d'un réseau rigide avec une température de transition vitreuse du polyuréthane du composant A2 entre +20 °C et +120 °C et

entre 1 et 20 % d'un réseau de polycarbamide rigide avec une température de transition vitreuse du polycarbamide du composant A3 entre +50 °C et +240 °C, et

les températures de transition vitreuse étant mesurées au moyen de l'AMD.

**11.** Corps moulé selon la revendication 10, **caractérisé en ce que** le réseau rigide est formé principalement dans les zones de bord du corps moulé avec une température de transition vitreuse du polyuréthane du composant A2 entre +20 °C et +120 °C.

**12.** Corps moulé selon l'une des revendications 10 à 11, **caractérisé en ce que** les gradients de dureté présentent une différence de dureté supérieure à 10 unités Shore-A.

**13.** Corps moulé selon l'une des revendications 10 à 12, **caractérisé en ce que** les gradients de dureté présentent une différence de dureté entre 20 et 70 unités Shore-A.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2825569
- DE 19643056
- DD 141759
- DE 102004023770
- US P6623169 B2
- US 20100022479 A1
- US 20100256272 A1
- WO 2008156891 A2
- US 20100249309 A1
- DE OS102006051309 A1
- US OS20070112122 A1
- US PS7144622 B1
- WO 0135886 A1
- US PS6692679 B1
- WO 2010060641 A2
- CN 001156518 C
- US 20090286629 A1